# EUROPÄISCHE PATENTANMELDUNG

(11) **EP 2 860 855 A1**
(43) Veröffentlichungstag der Anmeldung: **15.04.2015**
(21) Anmeldenummer: 13188460.3
(22) Anmeldetag: 14.10.2013
(51) Int. Cl.: H02K 9/08, H02K 9/10

(54) **Verfahren und System zum Kühlen einer rotierenden elektrischen Maschine**

(71) Anmelder: Siemens Aktiengesellschaft, 80333 München (DE)
(72) Erfinder: Grau Sorarrain, Esteban, 40215 Düsseldorf (DE); Jäkel, Christian, 45468 Mülheim an der Ruhr (DE); Koebe, Mario, 45478 Mülheim an der Ruhr (DE); Kowalski, Matthias, 45470 Mülheim an der Ruhr (DE); Lehmann, Christoph, 47506 Neukirchen-Vluyn (DE); Mashkin, Andrey, 50672 Köln (DE); Plotnikova, Olga, 42369 Wuppertal (DE); Schild, Carolin, 45478 Mülheim an der Ruhr (DE)

(57) **Zusammenfassung**

Ein System zum Kühlen einer rotierenden elektrischen Maschine, insbesondere eines Generators oder Elektromotors, aufweisend
- eine Kühlfluidzuführung zum Einleiten eines gasförmigen Kühlfluids in ein Gehäuse der rotierenden elektrischen Maschine, wobei die Kühlfluidzuführung wenigstens einen zum Komprimieren des in das Gehäuse einzuleitenden Kühlfluids eingerichteten Kompressor umfasst,
- wenigstens eine Erfassungseinrichtung zum Erfassen einer momentan von der rotierenden elektrischen Maschine abgegebenen Ist-Leistung, und
- eine derart kommunikationstechnisch mit dem Kompressor und der Erfassungseinrichtung verbundene, elektronische Steuereinrichtung, dass die jeweilig erfasste Ist-Leistung von der Erfassungseinrichtung an die Steuereinrichtung und Steuersignale von der Steuereinrichtung an den Kompressor übermittelbar sind,
- wobei die Steuereinrichtung eingerichtet ist, den Kompressor derart zu steuern, dass mit dem Kompressor ein in dem Kühlfluid herrschender Druck dann erhöht wird, wenn die jeweilig erfasste Ist-Leistung über einer in der Steuereinrichtung hinterlegten Grenzleistung liegt.

## Beschreibung

Die Erfindung betrifft ein Verfahren und ein System zum Kühlen einer rotierenden elektrischen Maschine, insbesondere eines Generators oder Elektromotors, sowie eine Anlage mit einer rotierenden elektrischen Maschine, insbesondere einem Generator oder einem Elektromotor.

Während des Betriebs einer rotierenden elektrischen Maschine, insbesondere eines Generators oder Elektromotors, wird durch Umwandlung von mechanischer Energie in elektrische Energie, und umgekehrt, mittels der rotierenden elektrischen Maschine zwangsläufig Wärme in der rotierenden elektrischen Maschine erzeugt. Diese Wärmeerzeugung wächst mit einer anwachsenden Auslastung einer rotierenden elektrischen Maschine an.

Für einen sicheren und dauerhaften Betrieb einer rotierenden elektrischen Maschine muss die Verlustwärme aus der rotierenden elektrischen Maschine abgeführt werden. Je mehr Wärme aus einer rotierenden elektrischen Maschine abgeführt wird, desto höher kann die rotierende elektrische Maschine ausgelastet werden, was mit einer entsprechenden Leistungssteigerung einhergeht.

Herkömmlich wird zur Wärmeabführung von einer rotierenden elektrischen Maschine ein gasförmiges Kühlfluid in Form von Umgebungsluft, von Wasserstoff oder eines Wasserstoff enthaltenden Gemischs eingesetzt, welches zur Kühlung der rotierenden elektrischen Maschine durch ein einen Rotor und einen Stator der rotierenden elektrischen Maschine enthaltendes Gehäuse der rotierenden elektrischen Maschine geleitet wird. Das Ausmaß der Kühlung einer rotierenden elektrischen Maschine hängt insbesondere von der Wärmekapazität des jeweilig zur Kühlung verwendeten Kühlfluids und der Strömungsgeschwindigkeit des Kühlfluids durch das Gehäuse der rotierenden elektrischen Maschine ab.

Üblicherweise ist eine rotierende elektrische Maschine derart ausgelegt, dass ein sicherer und dauerhafter Betrieb der rotierenden elektrischen Maschine sichergestellt ist, wenn die rotierende elektrische Maschine eine Bemessungsleistung abgibt. Dies bedeutet, dass eine herkömmliche rotierende elektrische Maschine derart ausgelegt ist, dass im Betrieb einer solchen rotierenden elektrischen Maschine eventuell auftretende Maximalauslastungen und hierbei von der rotierenden elektrischen Maschine erzeugte Maximalleistungen höchstens der Bemessungsleistung entsprechen, diese jedoch nicht überschreiten. Solche Maximalauslastungen treten jedoch beim Betrieb einer rotierenden elektrischen Maschine in der Regel nur relativ selten auf. Eine rotierende elektrische Maschine ist dennoch herkömmlich größer auszulegen, als es für den jeweiligen Anwendungsfall grundsätzlich erforderlich ist, was mit einer entsprechend groß dimensionierten Baugröße einer rotierenden elektrischen Maschine einhergeht.

Aufgabe der Erfindung ist es, wenigstens eine rotierende elektrische Maschine aufweisende Anlagen mit rotierenden elektrischen Maschinen betreiben zu können, deren Baugröße gegenüber herkömmlich in den Anlagen eingesetzten rotierenden elektrischen Maschinen reduziert ist, und hierdurch die mit entsprechenden Anlagen verbundenen Kosten zu senken.

Nach dem erfindungsgemäßen Verfahren zum Kühlen einer rotierenden elektrischen Maschine, insbesondere eines Generators oder Elektromotors, unter Verwendung eines ein Gehäuse der rotierenden elektrischen Maschine durchströmenden, gasförmigen Kühlfluids wird ein in dem Kühlfluid herrschender Druck dann erhöht, wenn eine momentan von der rotierenden elektrischen Maschine abgegebene Ist-Leistung über einer vorgebbaren Grenzleistung liegt.

Durch die erfindungsgemäße Erhöhung des in dem in das Gehäuse der rotierenden elektrischen Maschine eingeleiteten bzw. in dem Gehäuse befindlichen Kühlfluids herrschenden Drucks bei einer über der Grenzleistung liegenden Ist-Leistung wird die Dichte des Kühlfluids erhöht, wodurch die Wärmekapazität des Kühlfluids erhöht wird und die von der rotierenden elektrischen Maschine erzeugte Verlustwärme besser und schneller von der rotierenden elektrischen Maschine abgeführt werden kann. Diese verbesserte Effektivität der Kühlung einer stark ausgelasteten rotierenden elektrischen Maschine macht es möglich, für eine bestimmte Anwendung eine rotierende elektrische Maschine mit geringerer Bemessungsleistung und folglich geringeren Baugröße als bisher einzusetzen, da Maximalauslastungen oberhalb der mit der Bemessungsleistung verbundenen Bemessungsauslastung bzw. die dadurch auftretenden höheren thermischen Belastungen der rotierenden elektrischen Maschine durch die effektivere Kühlung besser aufgefangen werden können, was einen sicheren und dauerhaften Betrieb einer rotierenden elektrischen Maschine auch bei einem Überschreiten seiner Bemessungsleistung ermöglicht.

Gemäß der Erfindung kann somit eine rotierende elektrische Maschine für eine Anlage verwendet werden, deren Bemessungsleistung geringer als die Bemessungsleistung einer herkömmlich in einer solchen Anlage eingesetzten rotierenden elektrischen Maschine ist. Beispielsweise kann die Bemessungsleistung einer erfindungsgemäß gekühlten rotierenden elektrischen Maschine etwa 85% der Bemessungsleistung einer herkömmlich zu demselben Zweck eingesetzten rotierenden elektrischen Maschine betragen. Durch die erfindungsgemäße Kühlung einer solchen rotierenden elektrischen Maschine kann die Leistung der rotierenden elektrischen Maschine um etwa 15% gesteigert werden.

Eine Erhöhung des in dem Kühlfluid herrschenden Drucks kann derart erfolgen, dass der Druck ab einer einmaligen Überschreitung der Grenzleistung über ein Zeitintervall vorgebbarer Länge kontinuierlich erhöht wird, selbst dann, wenn zwischenzeitlich die Ist-Leistung kleiner oder gleich der Grenzleistung ist. Hierdurch kann vermieden werden, dass Schwankungen der Ist-Leistung um die Grenzleistung zu einem ständigen Ein- und Ausschalten der Druckerhöhung führen, was sich, beispielsweise in Form von erhöhtem Verschleiß, nachteilig auf zur Druckerhöhung eingesetzte Mittel auswirken könnte.

Der Betrag, um den der in dem Kühlfluid ohne Druckerhöhung herrschende Normaldruck bei Überschreitung der Grenzleistung erhöht wird, kann fest vorgegeben oder variabel sein.

Der in dem Kühlfluid herrschende Druck wird bevorzugt in Anhängigkeit der Leistungsdifferenz zwischen der Ist-Leistung und der Grenzleistung derart geregelt, dass der Druck zumindest mit wachsender Leistungsdifferenz anwächst. Hierdurch wird die Kühleffektivität mit steigender Auslastung der rotierenden elektrischen Maschine adaptiv gesteigert. Dadurch kann für einen bestimmten Zweck bzw. eine bestimmte Anlage eine rotierende elektrische Maschine verwendet werden, deren Baugröße deutlich geringer als die Baugröße einer herkömmlich für diesen Zweck eingesetzten rotierenden elektrischen Maschine ist.

Bevorzugt wird als Grenzleistung eine Bemessungsleistung der rotierenden elektrischen Maschine verwendet. Die Bemessungsleistung stellt eine gute Regelgröße für das erfindungsgemäße Verfahren dar. Alternativ kann die Grenzleistung auch über oder unter der Bemessungsleistung liegen, um das Verfahren an den jeweiligen Anwendungsfall optimal anpassen zu können.

Bevorzugt wird ein zumindest teilweise aus Luft und/oder Wasserstoff gebildetes Kühlfluid verwendet. Das Kühlfluid kann auch vollständig aus Luft bzw. Wasserstoff gebildet sein. Luft stellt ein kostengünstiges und im Wesentlichen überall verfügbares Kühlfluid dar.

Das erfindungsgemäße System zum Kühlen einer rotierenden elektrischen Maschine, insbesondere eines Generators oder Elektromotors, umfasst
- eine Kühlfluidzuführung zum Einleiten eines gasförmigen Kühlfluids in ein Gehäuse der rotierenden elektrischen Maschine, wobei die Kühlfluidzuführung wenigstens einen zum Komprimieren des in das Gehäuse einzuleitenden Kühlfluids eingerichteten Kompressor umfasst,
- wenigstens eine Erfassungseinrichtung zum Erfassen einer momentan von der rotierenden elektrischen Maschine abgegebenen Ist-Leistung, und
- eine derart kommunikationstechnisch mit dem Kompressor und der Erfassungseinrichtung verbundene, elektronische Steuereinrichtung, dass die jeweilig erfasste Ist-Leistung von der Erfassungseinrichtung an die Steuereinrichtung und Steuersignale von der Steuereinrichtung an den Kompressor übermittelbar sind,
- wobei die Steuereinrichtung eingerichtet ist, den Kompressor derart zu steuern, dass mit dem Kompressor ein in dem Kühlfluid herrschender Druck dann erhöht wird, wenn die jeweilig erfasste Ist-Leistung über einer in der Steuereinrichtung hinterlegten Grenzleistung liegt.

Die Kühlfluidzuführung zum Einleiten des gasförmigen Kühlfluids in das Gehäuse der rotierenden elektrischen Maschine kann wenigstens eine in das Gehäuse mündende Kühlfluidleitung aufweisen, an der der Kompressor angeordnet ist. Durch die Einleitung von komprimiertem Kühlfluid in das Gehäuse der rotierenden elektrischen Maschine wird zwangsläufig der in dem in dem Gehäuse angeordneten Kühlfluid herrschende Druck entsprechend erhöht. Als Kompressor kann ein Gebläse, ein Druckluftkompressor oder ein Verdichter eingesetzt werden.

Die Erfassungseinrichtung zum Erfassen einer momentan von der rotierenden elektrischen Maschine abgegebenen Ist-Leistung kann an einem elektrischen Abgang der rotierenden elektrischen Maschine angeordnet sein.

Die kommunikationstechnischen Verbindungen zwischen dem Kompressor und der Steuereinrichtung einerseits und zwischen der Erfassungseinrichtung und der Steuereinrichtung andererseits können kabellos oder kabelgebunden sein. Die Ist-Leistung kann von der Erfassungseinrichtung kontinuierlich oder in diskreten Schritten an die Steuereinrichtung übermittelt werden.

Zur Hinterlegung der Grenzleistung in der Steuereinrichtung weist die Steuereinrichtung einen Speicher auf. Dieser Speicher kann separat zu der übrigen Steuereinrichtung und durch ein separates elektronisches Bauteil ausgebildet sein.

Mit dem erfindungsgemäßen System sind die oben mit Bezug auf das Verfahren genannten Vorteile entsprechend verbunden.

Die Steuereinrichtung ist bevorzugt eingerichtet, den Kompressor derart zu steuern, dass der in dem Kühlfluid herrschende Druck in Anhängigkeit der Leistungsdifferenz zwischen der Ist-Leistung und der Grenzleistung derart geregelt wird, dass der Druck zumindest mit wachsender Differenz anwächst. Hiermit sind die oben mit Bezug auf die entsprechende Ausgestaltung des Verfahrens genannten Vorteile entsprechend verbunden.

Bevorzugt weist die Kühlfluidzuführung wenigstens ein dem Kompresser nachgeschaltetes, elektrisch ansteuerbares Ventil auf, welches derart kommunikationstechnisch mit der Steuereinrichtung verbunden ist, dass Steuersignale von der Steuereinrichtung an das Ventil übermittelbar sind, wobei die Steuereinrichtung eingerichtet ist, das Ventil derart anzusteuern, dass das Ventil geschlossen ist, wenn die jeweilig erfasste Ist-Leistung kleiner oder gleich der Grenzleistung ist, und geöffnet ist, wenn die jeweilig erfasste Ist-Leistung größer als die Grenzleistung ist. Das Ventil kann als Magnetventil ausgebildet sein. Auch die kommunikationstechnische Verbindung zwischen dem Ventil und der Steuereinrichtung kann kabellos oder kabelgebunden sein.

Die Grenzleistung ist bevorzugt eine Bemessungsleistung der rotierenden elektrischen Maschine. Alternativ kann die Grenzleistung auch über oder unter der Bemessungsleistung liegen, um das System an den jeweiligen Anwendungsfall optimal anpassen zu können.

Das Kühlfluid ist bevorzugt zumindest teilweise aus Luft und/oder Wasserstoff gebildet. Das Kühlfluid kann auch vollständig aus Luft bzw. Wasserstoff gebildet sein.

Die erfindungsgemäße Anlage weist wenigstens eine rotierende elektrische Maschine, insbesondere einen Generator oder einen Elektromotor, und zumindest ein System gemäß einer der vorbeschriebenen Ausgestaltungen oder einer beliebigen Kombination derselben auf. Hiermit sind die oben mit Bezug auf das System und das Verfahren genannten Vorteile entsprechend verbunden.

Im Folgenden wird eine bevorzugte Ausführungsform des erfindungsgemäßen Systems anhand der beigefügten schematischen Zeichnung erläutert. Es zeigt:

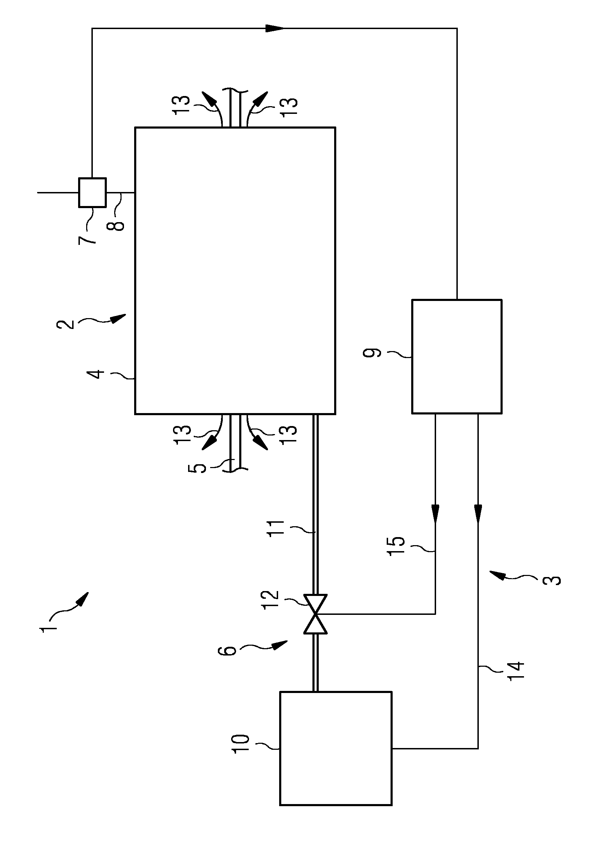

Fig. 1 eine Darstellung einer beispielshaften Ausführungsform einer erfindungsgemäßen Anlage.

Figur 1 zeigt eine schematische Darstellung einer beispielshaften Ausführungsform einer erfindungsgemäßen Anlage 1. Die Anlage 1 umfasst eine rotierende elektrische Maschine 2 in Form eines Generators und ein System 3 zum Kühlen der rotierenden elektrischen Maschine 2. Von der rotierenden elektrischen Maschine 2 sind ein Gehäuse 4 und eine Rotorwelle 5 zu sehen.

Das System 3 umfasst eine Kühlfluidzuführung 6 zum Einleiten eines zumindest teilweise aus Luft und/oder Wasserstoff gebildeten, gasförmigen Kühlfluids in das Gehäuse 4 der rotierenden elektrischen Maschine 2. Des Weiteren umfasst das System 3 eine Erfassungseinrichtung 7 zum Erfassen einer momentan von der rotierenden elektrischen Maschine 2 abgegebenen Ist-Leistung, welche zur Erfassung der Ist-Leistung an einem elektrischen Abgang 8 der rotierenden elektrischen Maschine 2 angeordnet ist. Das System 3 weist zudem eine derart kommunikationstechnisch mit der Erfassungseinrichtung 7 verbundene, elektronische Steuereinrichtung 9 auf, dass die jeweilig erfasste Ist-Leistung von der Erfassungseinrichtung 7 an die Steuereinrichtung 9 übermittelbar ist.

Die Kühlfluidzuführung 6 weist einen zum Komprimieren des in das Gehäuse 4 einzuleitenden Kühlfluids eingerichteten Kompressor 10 auf, welcher über eine Kühlfluidleitung 11 mit der rotierenden elektrischen Maschine 2 verbunden ist. Die elektronische Steuereinrichtung 9 ist derart kommunikationstechnisch mit dem Kompressor 10 verbunden, dass Steuersignale von der Steuereinrichtung 9 an den Kompressor 10 übermittelbar sind. Die Kühlfluidzuführung 6 weist des Weiteren ein dem Kompresser 10 nachgeschaltetes, elektrisch ansteuerbares, als Magnetventil ausgebildetes Ventil 12 auf, welches derart kommunikationstechnisch mit der Steuereinrichtung 9 verbunden ist, dass Steuersignale von der Steuereinrichtung 9 an das Ventil 12 übermittelbar sind.

Die Steuereinrichtung 9 ist eingerichtet, den Kompressor 10 derart zu steuern, dass mit dem Kompressor 10 ein in dem Kühlfluid herrschender Druck dann erhöht wird, wenn die jeweilig erfasste Ist-Leistung über einer in der Steuereinrichtung 9 hinterlegten Grenzleistung liegt. Diese Steuerung erfolgt über die kommunikationstechnische Verbindung 14.

Die Steuereinrichtung 9 ist des Weiteren eingerichtet, das Ventil 12 derart anzusteuern, dass das Ventil 12 geschlossen ist, wenn die jeweilig erfasste Ist-Leistung kleiner oder gleich der Grenzleistung ist, und geöffnet ist, wenn die jeweilig erfasste Ist-Leistung größer als die Grenzleistung ist. Diese Steuerung erfolgt über die kommunikationstechnische Verbindung 15.

Die Steuereinrichtung 9 kann ferner eingerichtet sein, den Kompressor 10 derart zu steuern, dass der in dem Kühlfluid herrschende Druck in Anhängigkeit der Leistungsdifferenz zwischen der Ist-Leistung und der Grenzleistung derart geregelt wird, dass der Druck zumindest mit wachsender Differenz anwächst.

Die Grenzleistung ist in der gezeigten Ausführungsform der Anordnung 1 eine Bemessungsleistung der rotierenden elektrischen Maschine 2.

Im Folgenden wird die Kühlung der rotierenden elektrischen Maschine 2 mittels des oben beschriebenen Systems 3 beschrieben:
In einem Betriebszustand der rotierenden elektrischen Maschine 2, in dem die Ist-Leistung der rotierenden elektrischen Maschine 2 kleiner oder gleich der Bemessungsleistung der rotierenden elektrischen Maschine 2 ist, wird ein zumindest teilweise aus Luft und/oder Wasserstoff gebildetes Kühlfluid in das Gehäuse 4 der rotierenden elektrischen Maschine 2 eingeleitet, was über die Kühlfluidleitung 11 oder über andere Zuleitungen erfolgen kann. Die Ist-Leistung der rotierenden elektrischen Maschine 2 wird mittels der Erfassungseinrichtung 7 und der Steuereinrichtung 9 überwacht. Das Ventil 12 ist während dieses Betriebszustands der rotierenden elektrischen Maschine 2 geschlossen. Der Kompressor 10 ist während dieses Betriebszustands der rotierenden elektrischen Maschine 2 abgeschaltet.

Überschreitet die erfasste Ist-Leistung der rotierenden elektrischen Maschine 2 die Bemessungsleistung, was über einen Vergleich der Ist-Leitung mit der Bemessungsleistung mittels der Steuereinrichtung 9 ermittelbar ist, sendet die Steuereinrichtung 9 ein Steuersignal an den Kompressor 10 und ein Steuersignal an das Ventil 12, woraufhin der Kompressor 10 mit der Komprimierung des Kühlfluids beginnt bzw. das Ventil 12 geöffnet wird.

Ist die Ist-Leistung der rotierenden elektrischen Maschine 2 wieder kleiner oder gleich der Bemessungsleistung der rotierenden elektrischen Maschine 2, endet die Übermittlung von Steuersignalen an den Kompressor 10 und das Ventil 12, wodurch der Kompressor 10 ausgeschaltet wird bzw. das Ventil 12 geschlossen wird. Der noch in dem Gehäuse 4 der rotierenden elektrischen Maschine 2 herrschende erhöhte Fluiddruck kann über einen Austritt von Kühlfluid aus dem Gehäuse 4 durch Gehäuseundichtigkeiten, insbesondere am Durchtritt der Rotorwelle 5 durch das Gehäuse 4, was durch die Pfeile 13 angedeutet sein soll, abgebaut werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Kühlen einer rotierenden elektrischen Maschine (2), insbesondere eines Generators oder Elektromotors, unter Verwendung eines ein Gehäuse (4) der rotierenden elektrischen Maschine (2) durchströmenden, gasförmigen Kühlfluids, wobei ein in dem Kühlfluid herrschender Druck dann erhöht wird, wenn eine momentan von der rotierenden elektrischen Maschine (2) abgegebene Ist-Leistung über einer vorgebbaren Grenzleistung liegt.

2. Verfahren gemäß Anspruch 1,
wobei der in dem Kühlfluid herrschende Druck in Anhängigkeit der Leistungsdifferenz zwischen der Ist-Leistung und der Grenzleistung derart geregelt wird, dass der Druck zumindest mit wachsender Leistungsdifferenz anwächst.

3. Verfahren gemäß Anspruch 1 oder 2,
wobei als Grenzleistung eine Bemessungsleistung der rotierenden elektrischen Maschine (2) verwendet wird.

4. Verfahren gemäß einem der Ansprüche 1 bis 3,
wobei ein zumindest teilweise aus Luft und/oder Wasserstoff gebildetes Kühlfluid verwendet wird.

5. System (3) zum Kühlen einer rotierenden elektrischen Maschine (2), insbesondere eines Generators oder Elektromotors, aufweisend
- eine Kühlfluidzuführung (6) zum Einleiten eines gasförmigen Kühlfluids in ein Gehäuse (4) der rotierenden elektrischen Maschine (2), wobei die Kühlfluidzuführung (6) wenigstens einen zum Komprimieren des in das Gehäuse (4) einzuleitenden Kühlfluids eingerichteten Kompressor (10) umfasst,
- wenigstens eine Erfassungseinrichtung (7) zum Erfassen einer momentan von der rotierenden elektrischen Maschine (2) abgegebenen Ist-Leistung, und
- eine derart kommunikationstechnisch mit dem Kompressor (10) und der Erfassungseinrichtung (7) verbundene, elektronische Steuereinrichtung (9), dass die jeweilig erfasste Ist-Leistung von der Erfassungseinrichtung (7) an die Steuereinrichtung (9) und Steuersignale von der Steuereinrichtung (9) an den Kompressor (10) übermittelbar sind,
- wobei die Steuereinrichtung (9) eingerichtet ist, den Kompressor (10) derart zu steuern, dass mit dem Kompressor (10) ein in dem Kühlfluid herrschender Druck dann erhöht wird, wenn die jeweilig erfasste Ist-Leistung über einer in der Steuereinrichtung (9) hinterlegten Grenzleistung liegt.

6. System (3) gemäß Anspruch 5,
wobei die Steuereinrichtung (9) eingerichtet ist, den Kompressor (10) derart zu steuern, dass der in dem Kühlfluid herrschende Druck in Anhängigkeit der Leistungsdifferenz zwischen der Ist-Leistung und der Grenzleistung derart geregelt wird, dass der Druck zumindest mit wachsender Differenz anwächst.

7. System (3) gemäß Anspruch 5 oder 6,
wobei die Kühlfluidzuführung (6) wenigstens ein dem Kompresser (10) nachgeschaltetes, elektrisch ansteuerbares Ventil (12) aufweist, welches derart kommunikationstechnisch mit der Steuereinrichtung (9) verbunden ist, dass Steuersignale von der Steuereinrichtung (9) an das Ventil (12) übermittelbar sind, wobei die Steuereinrichtung (9) eingerichtet ist, das Ventil (12) derart anzusteuern, dass das Ventil (12) geschlossen ist, wenn die jeweilig erfasste Ist-Leistung kleiner oder gleich der Grenzleistung ist, und geöffnet ist, wenn die jeweilig erfasste Ist-Leistung größer als die Grenzleistung ist.

8. System (3) gemäß einem der Ansprüche 5 bis 7,
wobei die Grenzleistung eine Bemessungsleistung der rotierenden elektrischen Maschine (2) ist.

9. System (3) gemäß einem der Ansprüche 5 bis 8,
wobei das Kühlfluid zumindest teilweise aus Luft und/oder Wasserstoff gebildet ist.

10. Anlage (1) mit wenigstens einer rotierenden elektrischen Maschine (2), insbesondere einem Generator oder einem Elektromotor, und zumindest einem System (3) gemäß einem der Ansprüche 5 bis 9.
